# EUROPEAN PATENT APPLICATION

(11) **EP 4 632 860 A2**
(43) Date of publication of application: **15.10.2025**
(21) Application number: 25197939.9
(22) Date of filing: 17.09.2021
(51) Int. Cl.: H01M 10/0525

(54) **ELECTRODE ACTIVE MATERIAL FOR ELECTROCHEMICAL ELEMENT AND METHOD FOR PRODUCING SAME, ELECTRODE MATERIAL FOR ELECTROCHEMICAL ELEMENT, ELECTRODE FOR ELECTROCHEMICAL ELEMENT, ELECTROCHEMICAL ELEMENT, AND MOBILE OBJECT**

(30) Priority: 16.10.2020 JP 2020174408
(62) Divisional of application: 21879824.7
(71) Applicant: Maxell, Ltd., Kyoto 618-8525 (JP)
(72) Inventor: Tomita, Kentaro, Otokuni-gun, Kyoto 618-8525 (JP); Sato, Yuta, Otokuni-gun, Kyoto 618-8525 (JP); Kamizori, Haruki, Otokuni-gun, Kyoto 618-8525 (JP)
(74) Representative: Diehl & Partner

(57) **Abstract**

Provided is an electrochemical element having excellent load characteristics and charge-discharge cycle characteristics, an electrode active material that can constitute the electrochemical element, a method for manufacturing the electrode active material, an electrode material, an electrode, and a movable body including the electrochemical element.

The electrode active material for an electrochemical element according to the present invention includes an oxide that has a monoclinic crystal structure and satisfies the following general formula (1).

A_{y}M¹_{α}Al_{x-α}Nb_{12-x-z}M²_{z}O_{29-δ} (1)

[in the general formula (1), A is at least one element selected from Li and Na, M¹ is at least one element selected from the group consisting of Fe, Mn, Zn, Cu, Ag, Mg, Ca, Sr, Ba, Co, Eu, Y, Bi, La, Ce, Nd, Sm, and Gd, M² is specific element, and *x, y, z, δ*, and a satisfy 0<x≤1.1, 0≤y≤24, 0≤z≤2, -1≤δ≤2, and 0<α≤0.4x.]

## Description

### Technical Field

The present invention relates to an electrochemical element having excellent load characteristics and excellent charge-discharge cycle characteristics, an electrode active material that can constitute the electrochemical element, a method for manufacturing the electrode active material, an electrode material, an electrode, and a movable body including the electrochemical element.

### Background Art

Nonaqueous electrolyte secondary batteries, which are one type of electrochemical elements, are used for power sources of portable electronic devices such as cellular phones and laptop personal computers, and electric vehicles. As these devices are downsized and their functionality is improved, there is a demand for smaller and lighter nonaqueous electrolyte secondary batteries having a high capacity and a high energy density.

In existing nonaqueous electrolyte secondary batteries, a lithium-containing composite oxide is commonly used as a positive-electrode active material, and graphite or the like is commonly used as a negative-electrode active material.

Also, an attempt to use spinel-type lithium titanate (Li₄Ti₅O₁₂) as the negative-electrode active material has been made to produce a battery that can be charged and discharged at a large current value without causing an internal short circuit due to deposition of lithium on the negative electrode, for example. However, there is a problem in that the theoretical capacity [175 mAh/g (600 mAh/cm³)] of lithium titanate is small compared with the theoretical capacity [372 mAh/g (830 mAh/cm³)] of graphite.

Therefore, studies have been made in recent years to apply an oxide of niobium and other metal, such as TiNb₂O₇, Ti₂Nb₁₀O₂₉, AlNb₁₁O₂₉, Zn₂Nb₃₄O₈₇, or Cu_{0.02}Ti_{0.94}Nb_{2.04}O₇, as a negative-electrode active material that has a larger capacity than lithium titanate (Patent Documents 1 to 5 and Non-Patent Documents 1 to 4, for example).

### Citation List

### Patent Documents

Patent Document 1: JP 2018-160365A
Patent Document 2: JP 2019-53945A
Patent Document 3: JP 2019-160729A
Patent Document 4: JP 2021-82420A
Patent Document 5: WO 2021/074592

### Non-Patent Documents

Non-Patent Document 1: Electrochemistry Communications, 2012, vol. 25, pp. 39-42
Non-Patent Document 2: ACS Applied Material Interfaces, 2019, vol. 11, pp. 6089-6096
Non-Patent Document 3: Journal of Materials Chemistry A, 2019, vol. 7, pp. 25537-25547
Non-Patent Document 4: Journal of Power Sources, 2016, vol. 328, pp. 336-344

### Summary of Invention

### Problem to be Solved by the Invention

There is also demand for improving the load characteristics and the charge-discharge cycle characteristics of nonaqueous electrolyte secondary batteries, but when the materials disclosed in Patent Documents 1 to 5 and Non-Patent Documents 1 to 4 are used as active materials, it is difficult to improve both the load characteristics and the charge-discharge cycle characteristics.

The present invention was made in view of the above circumstances, and has an object of providing an electrochemical element having excellent load characteristics and excellent charge-discharge cycle characteristics, an electrode active material that can constitute the electrochemical element, a method for manufacturing the electrode active material, an electrode material, an electrode, and a movable body including the electrochemical element.

### Means for Solving Problem

An electrode active material for an electrochemical element according to the present invention is an oxide that has a monoclinic crystal structure and satisfies the following general formula (1).

A_{y}M¹_{α}Al_{x-α}Nb_{12-x-z}M²_{z}O²_{z}O_{29-δ} (1)

In the general formula (1), Ais at least one element selected from Li and Na, M¹ is at least one element selected from the group consisting of Fe, Mn, Zn, Cu, Ag, Mg, Ca, Sr, Ba, Co, Eu, Y, Bi, La, Ce, Nd, Sm, and Gd, M² is at least one element selected from the group consisting of K, Ti, Ni, Zr, V, Mo, Ta, and W, and *x, y, z, δ*, and *α* satisfy 0<x≤1.1, 0≤y≤24, 0≤z≤2, -1≤δ≤2, and 0<α≤0.4x.

An electrode material for an electrochemical element according to the present invention includes the electrode active material for an electrochemical element according to the present invention.

An electrode for an electrochemical element according to the present invention includes the electrode active material for an electrochemical element according to the present invention or the electrode material for an electrochemical element according to the present invention.

An electrochemical element according to the present invention includes a positive electrode and a negative electrode, and either the positive electrode or the negative electrode is the electrode for an electrochemical element according to the present invention.

A movable body according to the present invention includes the electrochemical element according to the present invention.

It is possible to further improve characteristics of the electrode active material for an electrochemical element according to the present invention by producing the electrode active material through a step of firing the oxide represented by the general formula (1) or a precursor of the oxide in a container made of carbon in a vacuum atmosphere.

### Effects of the Invention

According to the present invention, it is possible to provide an electrochemical element having excellent load characteristics and excellent charge-discharge cycle characteristics, an electrode active material that can constitute the electrochemical element, a method for manufacturing the electrode active material, an electrode material, an electrode, and a movable body including the electrochemical element.

### Brief Description of Drawings

[FIG. 1] FIG. 1 is a schematic cross-sectional view showing an example of an electrochemical element according to an embodiment of the present invention.
[FIG. 2] FIG. 2 is a schematic plan view showing another example of the electrochemical element according to an embodiment of the present invention.
[FIG. 3] FIG. 3 is a cross-sectional view taken along line I-I in FIG. 2.

### Disclosure of Invention

The following describes the present invention based on an embodiment.

### Electrode Active Material for Electrochemical Element

An electrode active material for an electrochemical element (hereinafter can be simply referred to as an "active material") according to the present embodiment is an oxide that has a monoclinic crystal structure and satisfies the following general formula (1).

A_{y}M¹_{α}Al_{x-α}Nb_{12-x-z}M²_{z}O_{29-δ} (1)

In the general formula (1), Ais at least one element selected from Li and Na, M¹ is at least one element selected from the group consisting of Fe, Mn, Zn, Cu, Ag, Mg, Ca, Sr, Ba, Co, Eu, Y, Bi, La, Ce, Nd, Sm, and Gd, M² is at least one element selected from the group consisting of K, Ti, Ni, Zr, V, Mo, Ta, and W, and *x, y, z, δ*, and *α* satisfy 0<x≤1.1, 0≤y≤24, 0≤z≤2, -1≤δ≤2, and 0<α≤0.4x.

The examples of the element M¹, namely Fe (Fe²⁺), Mn (Mn²⁺), Zn (Zn²⁺), Cu (Cu⁺, Cu²⁺), Ag (Ag⁺), Mg (Mg²⁺), Ca (Ca²⁺), Sr (Sr²⁺), Ba (Ba²⁺), Co (Co²⁺), Eu (Eu²⁺, Eu³⁺), Y (Y³⁺), Bi (Bi³⁺), La (La³⁺), Ce (Ce³⁺, Ce⁴⁺), Nd (Nd³⁺), Sm (Sm³⁺), and Gd (Gd³⁺) have larger effective ionic radiuses than Nb (Nb⁵⁺) and Al (Al³⁺). The oxide represented by the general formula (1) includes AlNb₁₁O₂₉ as a base component, and a portion of Al is substituted with the element M¹, and accordingly, the oxide has a larger crystal lattice constant than AlNb₁₁O₂₉ and diffusibility of ions of the element A inside the oxide is increased. Therefore, the load characteristics of an electrochemical element produced by using the active material of the present embodiment are improved.

Al in AlNb₁₁O₂₉ has a function of stabilizing the crystal structure, and it is conceivable that stability of the crystal structure of the oxide could be impaired as a result of a portion of Al being substituted with the element M¹, and it is expected that, consequently, a reduction in the capacity will be more likely to occur (the charge-discharge cycle characteristics will degrade) when the electrochemical element produced by using the oxide as the active material is repeatedly charged and discharged.

However, contrary to this expectation, when the amount of Al substituted with the element M¹ is within a certain range as expressed by the general formula (1), a reduction in the capacity through repeated charging and discharging can be more favorably suppressed in the electrochemical element produced by using the oxide as the active material, when compared with a case where AlNb₁₁O₂₉ is used. This is presumably because inclusion of the element M¹ having a larger ionic radius than Nb (Nb⁵⁺) and Al (Al³⁺) increases the lattice constant of the oxide before ions of the element A, which serve as carriers, are inserted, and thus a space into which ions of the element A are occluded is enlarged, and a change in the volume of the oxide (active material) can be suppressed when ions of the element A are inserted or released during charging and discharging, and therefore, degradation of the electrode can be suppressed even when the electrochemical element is repeatedly charged and discharged.

As described above, the active material according to the present embodiment makes it possible to improve the load characteristics of the electrochemical element while maintaining high charge-discharge cycle characteristics.

The oxide represented by the general formula (1) can contain, as the element M¹, only one element or two or more elements selected from Fe, Mn, Zn, Cu, Ag, Mg, Ca, Sr, Ba, Co, Eu, Y, Bi, La, Ce, Nd, Sm, and Gd. Out of these elements M¹, Fe, Mn, Zn, and Cu are preferable, and Zn and Cu are more preferable because it is particularly easy to substitute Al with these elements because of electron arrangement, and these elements have a high effect of increasing electron conductivity of the oxide.

In a case where the oxide represented by the general formula (1) includes an element that has a plurality of valencies, such as Fe³⁺/Fe²⁺ or Cu²⁺/Cu⁺, as the element M¹, large oxygen deficiency could occur (i.e., *δ* in the general formula (1) can be more than 0), and consequently, electron conductivity and ion conductivity of the oxide represented by the general formula (1) are further improved. Therefore, further improvement of the load characteristics of the electrochemical element can be expected in the case where the oxide represented by the general formula (1) includes Fe or Cu as the element M¹.

The oxide represented by the general formula (1) can also include at least one element M² selected from the group consisting of K, Ti, Ni, Zr, V, Mo, Ta, and W, other than the element M¹ substituting a portion of Al. In the oxide represented by the general formula (1) and having the monoclinic crystal structure, these elements M² are components that do not substitute a portion of Al constituting the crystal, but substitute Nb, or components that are contained in the crystal as impurities or forming a solid solution. The oxide represented by the general formula (1) does not have to include the element M², and the amount *z* of the element M² can be 0. In a case where the oxide includes the element M², inclusion of the element M² in an amount *z* of 2 or less does not affect properties of the active material of the present embodiment, and thus is allowable. The oxide represented by the general formula (1) can also contain water.

In the oxide represented by the general formula (1), Al is a component for increasing structural stability of the oxide, and such a function of Al improves reversibility of the active material during charging and discharging of the electrochemical element.

In the oxide represented by the general formula (1), a portion of Al is substituted with the element M¹ as described above, and the total xof the amount of Al and the amount of the element M¹ is more than 0, and preferably 0.8 or more from the viewpoint of making Al and the element M¹ more effectively exhibit their functions described above. However, if the amounts of Al and the element M¹ in the oxide are too large, there is a risk that the amount of Nb in the oxide will be too small and its function will not be effectively exhibited. Therefore, the total *x* of the amount of Al and the amount of the element M¹ is 1.1 or less, and preferably 1.05 or less.

In the oxide represented by the general formula (1), the amount *α* of the element M¹ is more than 0, and preferably 0.05 or more from the viewpoint of more effectively obtaining the effect of increasing the load characteristics of the electrochemical element. However, if the amount of the element M¹ in the oxide represented by the general formula (1) is too large, there is a risk that stability of the crystal structure will decrease and the charge-discharge cycle characteristics of the electrochemical element will not be kept high. Therefore, the amount *α* of the element M¹ in the oxide represented by the general formula (1) is 0.4x or less, or more specifically, preferably 0.44 or less, and more preferably 0.4 or less from the viewpoint of achieving favorable charge-discharge cycle characteristics of the electrochemical element.

In the oxide represented by the general formula (1), the element Ais at least one of Li and Na and is occluded by the oxide or released from the oxide (i.e., functions as a carrier) during charging and discharging of the electrochemical element. The oxide does not have to include the element A, but can include the element A. In the case where the oxide does not include the element A, ions of the element A are inserted into the oxide as a result of the electrochemical element in which the oxide is used as a negative-electrode active material, for example, being charged or the oxide being pre-doped with ions of the element A before being used for the electrochemical element.

The amount yof the element A in the oxide represented by the general formula (1) is 0 or more and 24 or less.

In the oxide represented by the general formula (1), the amount of oxygen is originally 29 as in AlNb₁₁O₂₉, but can fluctuate due to the presence of the element M¹, for example. Specifically, *δ* in the general formula (1) is -1 or more and 2 or less, and preferably 1.95 or less. When *δ* in the general formula (1) is more than 0, oxygen deficiency occurs in the oxide. In this case, electron conductivity and element A ion conductivity of an active material including the oxide are improved, and accordingly, it is possible to further increase the energy density of the electrochemical element with use of the active material.

In the oxide represented by the general formula (1), *δ* relating to the amount of oxygen is determined according to the amounts of the element M¹, the element M², Nb, and Al, which form positive ions, and the amount of oxygen, which forms negative ions.

More preferable form of the active material according to the present embodiment can be an oxide represented by the general formula (1) and satisfying the following general formula (2).

M¹_{α}Al_{1-1.5α}Nb_{11+0.5α}O_{29-δ} (2)

The element M¹ in the general formula (2) is at least one of Zn and Cu, and *α* and *δ* satisfy 0<α≤0.4, and 0≤δ≤0.5α. The amount a of the element M¹ in the general formula (2) is preferably 0.05 or more and 0.4 or less, and more preferably 0.35 or less. In the general formula (2), *δ* relating to the amount of oxygen is 0 or more and 0.5α or less. Since *α* satisfies 0<α≤0.4 as described above, the value of *δ* is 0 or more and 0.2 or less.

The oxide represented by the general formula (1) and satisfying the general formula (2) satisfies the following general formula (3), for example, when Li ions are inserted.

Li_{y}M¹_{α}Al_{1-1.5α}Nb_{11+0.5α}O_{29-δ} (3)

In the general formula (3), the element M¹, the amount *α* of the element M¹, and *δ* relating to the amount of oxygen are the same as those in the general formula (2), and*y* satisfies 0<y≤22.

In the active material according to the present embodiment, the oxide represented by the general formula (1) is preferably subjected to a reduction treatment. Nb included in the oxide is usually pentavalent (Nb⁵⁺), but when the oxide is subjected to the reduction treatment, tetravalent Nb (Nb⁴⁺) is also included in the oxide. Nb⁴⁺ has a larger ionic radius than Nb⁵⁺, and accordingly, tetravalent Nb included in the oxide increases the lattice size of the oxide having the monoclinic crystal structure. Moreover, oxygen deficiency occurs (consequently the value of *δ* in the general formula (1) increases) not only due to the oxide represented by the general formula (1) including the element M¹ but also due to the oxide being subjected to the reduction treatment. In the case of the active material including the oxide subjected to the reduction treatment, electron conductivity and diffusibility of element A ions are further improved by synergistic effect of the above-described increase in the lattice size and oxygen deficiency. Therefore, for example, the energy density of the electrochemical element can be further increased with use of the active material including the oxide subjected to the reduction treatment.

In a case where the active material satisfies the following condition (a) or (b), it can be said that the oxide included in the active material has been deoxidized to such an extent that electron conductivity and diffusibility of element A ions of the active material are further improved.
(a) A percentage Z (atomic %) of Nb⁴⁺ in all Nb in the oxide represented by the general formula (1) and included in the active material satisfies 3.5≤Z≤30.
(b) The active material including the oxide satisfies relationships of A1<A2 and A3<A2, where A1 is an absorbance at a wavelength of 500 nm, A2 is an absorbance at a wavelength of 600 nm, and A3 is an absorbance at a wavelength of 700 nm.

The color of the active material including the oxide changes from white or yellow to blue when the active material is subjected to a reduction treatment. Therefore, when the above condition (b) is satisfied, i.e., the relationships of A1<A2 and A3<A2 are satisfied, it can be determined that the oxide included in the active material has been deoxidized to such an extent that electron conductivity and diffusibility of element A ions of the active material are improved.

More specific example of the oxide subjected to a reduction treatment is an oxide represented by the general formula (1) in which M¹ is at least one element selected from the group consisting of Fe, Cu, and Zn, and *δ* satisfies 0<δ≤2.

Note that the ratio of the element M¹ differs between the surface and the inside of the active material including the oxide subjected to a reduction treatment, and the element M¹ is more likely to be present at the surface portion. Specifically, the active material preferably satisfies a relationship of P>Q, where P is an atomic percentage of the element M¹ relative to Nb (ratio of the number of element M¹ atoms when the number of Nb atoms is taken as 100, the same applies to an atomic percentage Q) determined through X-ray photoelectron spectroscopy (XPS) and Q is an atomic percentage of the element M¹ relative to Nb determined through inductively coupled plasma atomic emission spectroscopy (ICP-AES). In this case, the effect of improving the energy density of the electrochemical element can be enhanced.

The percentage of the oxide having the monoclinic crystal structure and represented by the general formula (1) in the total amount of active material according to the present embodiment can be preferably 20 mass% or more, more preferably 50 mass% or more, and can be 100 mass%.

The active material according to the present embodiment has excellent output characteristics, and therefore, is unlikely to be affected by polarization that occurs as a result of Li ions diffusing inside the active material due to an increase in the particle size of active material particles. For the same reason, aggregates (secondary particles) of primary particles of the active material can be formed. However, from the viewpoint of improving the load characteristics and the charge-discharge cycle characteristics of the electrochemical element, it is preferable that secondary particles are constituted by primary particles of the active material sintered together, and it is more preferable to use primary particles of the active material.

### Method for Manufacturing Active Material for Electrochemical Element

There is no particular limitation on the method for manufacturing the active material according to the present embodiment, and the active material can be manufactured by, for example, synthesizing a niobium oxide [oxide represented by the general formula (1)] by using a solid phase reaction method in which precursors of the active material [oxide represented by the general formula (1)], such as oxides of various metals including Nb, Al, the element M¹, etc., are mixed and fired, or a reaction method in which a mixture of metal compounds produced by coprecipitating chloride salts, nitrates, or alkoxides of metals in a liquid phase is used as a precursor.

In the solid phase reaction method, firing is performed preferably at a temperature of 800°C or higher, and more preferably within a range from 900°C to 1400°C from the viewpoint of enhancing mutual diffusion of various metal ions. There is no particular limitation on the firing time, and firing can be performed for 1 to 1000 hours. If the firing temperature is higher than 1200°C, a crystal phase other than the monoclinic crystal phase can be generated or the composition of the active material can not satisfy the general formula (1) because of gradually emitting oxygen from the sample. Therefore, the time for which the temperature is kept at 1200°C or higher is more preferably no longer than 10 hours. There is no particular limitation on the cooling rate at which the fired sample is cooled as long as the monoclinic crystal phase can be obtained, but the cooling rate is preferably 15°C/minute to 60°C/minute (including natural cooling) in order to obtain a monoclinic crystal phase that is stable at high temperatures. Rapid cooling can also be performed at a cooling rate of 1°C/second to 1000°C/second.

The reduction treatment can be performed by placing the precursor in a container made of carbon, and firing the precursor in a vacuum atmosphere. Firing is preferably performed at a temperature of 800°C to 1200°C, for example, for 1 to 1000 hours, for example.

Note that the "vacuum atmosphere" referred to in the present specification means that the pressure inside the firing furnace is not higher than a low vacuum (100 Pa to 31 kPa) specified in ISO 3529-1, and the pressure is more preferably not higher than a medium vacuum (0.1 Pa to 100 Pa).

### Method for Determining Composition of Active Material for Electrochemical Element

The composition of the active material according to the present embodiment can be analyzed with use of ICP-AES, for example. In a case where it is difficult to perform quantification using the ICP-AES because the active material according to the present embodiment is sintered with an oxide-based solid electrolyte and it is difficult to separate the components, for example, the composition can also be determined with use of various element analysis methods such as those performed using an energy dispersive X-ray spectrometer (EDS) or a wavelength dispersive X-ray spectrometer (WDS) in combination with a scanning electron microscope (SEM) or a transmission electron microscope (TEM).

The amount *δ* of oxygen deficiency in the active material of the present embodiment is determined based on the molar quantity of oxygen determined by using an oxygen nitrogen analysis device (e.g., ON736) manufactured by LECO JAPAN CORPORATION relative to the sum of molar quantities of the element M¹, the element M², Al, and Nb determined through ICP-AES.

The molar quantity Z (%) of Nb⁴⁺ relative to the total molar quantity of Nb in the active material of the present embodiment can be determined from an area ratio of a Nb3d5/2 peak in an XPS spectrum.

### Method for Confirming Monoclinic Structure of Active Material for Electrochemical Element

It is possible to determine the crystal structure of the active material according to the present embodiment by measuring a powder X-ray diffraction (powder XRD) pattern using RINT2500VPC manufactured by Rigaku (X-ray used: CuKα ray) and comparing the pattern with the Powder Diffraction File (PDF) database or analyzing the pattern through Rietveld method. When crystal lattice sizes of different samples are to be compared, Si powder (manufactured by Rigaku, a₀=5.4308 Å at 298.1 K) is mixed as an internal reference when the samples for the powder XRD measurement are prepared, and spectrums are corrected such that a peak attributed to X-ray diffraction at the (111) plane of Si is at 2θ=28.442 degree. It is possible to calculate a lattice constant (d₀₁₀) in the b-axis direction of a unit lattice by setting the wavelength of X-rays to 1.5418 Å and doubling an interplanar spacing determined from a peak attributed to diffraction at the (020) plane. In a case where the active material of the present embodiment is contained as a negative-electrode active material in the negative electrode, it is possible to obtain a powder XRD pattern of the electrode by taking out the negative electrode of the electrochemical element (e.g., battery) after constant-resistance discharging is performed for 100 hours by connecting a 1-kΩ resistor, flattening a surface of the electrode opposite to its surface joined to a current collector to make the surface parallel to the current collector, and then fixing the electrode to a sample table for powder XRD measurement. In a case where the active material of the present embodiment is contained as a positive-electrode active material in the positive electrode, it is possible to obtain a powder XRD pattern of the electrode by taking out the positive electrode of the electrochemical element (e.g., battery) after constant-current charging is performed at 10 µA with the upper limit voltage set to 3 V and then the electrochemical element is kept in a constant-voltage state of 3 V for 100 hours, flattening a surface of the electrode opposite to its surface joined to a current collector to make the surface parallel to the current collector, and then fixing the electrode to a sample table for powder XRD measurement, as is the case with the negative electrode.

In a case where the active material of the present embodiment is sintered with a crystalline sulfide-based solid electrolyte or oxide-based solid electrolyte, it is possible to confirm the monoclinic structure by obtaining a test piece from a molded article of a sample containing the active material of the present embodiment through focused ion beam (FIB) processing, placing the test piece on a TEM sample table, performing thinning processing to obtain a thin piece with a thickness of 100 nm or less, acquiring a selected area electron diffraction (SAD) pattern using the TEM, and analyzing the pattern.

### Method for Measuring Absorbance of Active Material for Electrochemical Element

The absorbance of the active material according to the present embodiment can be determined by dispersing 5 mg of the active material in 20 ml of water by using an ultrasonic disperser, placing the thus obtained suspension in a 1-cm³ cuvette, and measuring the absorbance at wavelengths of 500 nm, 600 nm, and 700 nm by using a visible and near-infrared spectrophotometer.

### Method for Measuring aforementioned P and Q in Active Material for Electrochemical Element

The aforementioned P can be determined from the ratio of an area of a peak attributed to the element M¹ to an area of a peak attributed to Nb in an XPS spectrum. The aforementioned Q is the ratio of a molar quantity of the element M¹ to a molar quantity of Nb determined through ICP-AES.

### Electrode Material for Electrochemical Element

An electrode material for an electrochemical element (hereinafter can be simply referred to as an "electrode material") according to the present embodiment contains the electrode active material for an electrochemical element according to the above embodiment, and can contain other materials for forming an electrode for an electrochemical element together with the active material. Examples of such materials can include a conductive assistant such as carbon black, a binder, and a solid electrolyte, and the electrode material can contain one or two or more of these as necessary together with the active material of the above embodiment.

The electrode material can be constituted by the active material and another material attached to the surface of the active material or a mixture of the active material and another material. It is only required that the active material and another material are contained together in the electrode material.

In a case where the electrode material contains carbon black, examples of the carbon black include thermal black, furnace black, channel black, Ketjen black, and acetylene black. When the electrode material contains carbon black, the content of carbon black in the electrode material can be 0.1 to 25 parts by mass relative to 100 parts by mass of the active material of the above embodiment, for example.

In a case where the electrode material contains a binder, examples of the binder include fluororesins such as polyvinylidene fluoride (PVDF). When the electrode material contains a binder, the content of the binder in the electrode material can be 0.1 to 25 parts by mass relative to 100 parts by mass of the active material of the above embodiment, for example.

In a case where the electrode material contains a solid electrolyte, the solid electrolyte is not particularly limited as long as it has a Li ion conductivity, and examples of solid electrolytes that can be used include sulfide-based solid electrolytes, hydride-based solid electrolytes, halide-based solid electrolytes, and oxide-based solid electrolytes.

Examples of the sulfide-based solid electrolytes include particles of Li₂S-P₂S₅-based glass, Li₂S-SiS₂-based glass, Li₂S-P₂S₅-GeS₂-based glass, and Li₂S-B₂S₃-based glass. It is also possible to use thio-LISICON-type solid electrolytes [represented by Li_{12-12a-b+c+6d-e}M¹_{3+a-b-c-d}M²_{b}M³_{c}M⁴_{d}M⁵₁₂₋ₑXₑ (where M¹ is Si, Ge, or Sn, M² is P or V, M³ is Al, Ga, Y, or Sb, M⁴ is Zn, Ca, or Ba, M⁵ is either S or S and O, X is F, Cl, Br, or I, and *a, b, c, d,* e satisfy 0≤a<3, 0≤b+c+d≤3, and 0≤e≤3) such as Li₁₀GeP₂S₁₂ and Li_{9.54}Si_{1.74}P_{1.44}S_{11.7}Cl_{0.3}] and argyrodite-type solid electrolytes [represented by Li_{7-f+g}PS₆₋ₓCl_{x+y} (where *f* and *g* satisfy 0.05≤f≤0.9 and -3.0f+1.8≤g≤-3.0f+5.7) such as Li₆PS₅Cl, or represented by Li₇₋ₕPS₆₋ₕClᵢBrⱼ (where *h, i,* and*j* satisfy h=i+j, 0<h≤1.8, and 0.1≤i/j≤10.0), for example], which attract attention in recent years due to their high Li ion conductivity.

Examples of the hydride-based solid electrolytes include LiBH₄ and a solid solution of LiBH₄ and any of the following alkali metal compounds (e.g., a solid solution in which the molar ratio between LiBH₄ and the alkali metal compound is 1:1 to 20:1). As the alkali metal compound in the solid solution, it is possible to use at least one selected from the group consisting of lithium halides (LiI, LiBr, LiF, LiCl, etc.), rubidium halides (RbI, RbBr, RbF, RbCl, etc.), cesium halides (CsI, CsBr, CsF, CsCl, etc.), lithium amides, rubidium amides, and cesium amides.

Examples of the halide-based solid electrolytes include monoclinic LiAlCl₄, defective spinel-type or layered-structure LiInBr₄, and monoclinic Li₆₋₃ₘYₘX₆ (where *m* satisfies 0<m<2, and X is Cl or Br). It is also possible to use known halide-based solid electrolytes such as those described in WO 2020/070958 and WO 2020/070955, for example.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

Among these solid electrolytes, sulfide-based solid electrolytes are preferable for their high Li ion conductivity, sulfide-based solid electrolytes containing Li and P are more preferable, and argyrodite-type sulfide-based solid electrolytes are further preferable for their particularly high Li ion conductivity and high chemical stability.

When the electrode material contains a solid electrolyte, the content of the solid electrolyte in the electrode material can be 0.1 to 500 parts by mass relative to 100 parts by mass of the active material of the above embodiment, for example.

### Electrode for Electrochemical Element

An electrode for an electrochemical element (hereinafter can be simply referred to as an "electrode") according to the present embodiment contains the active material of the above embodiment or the electrode material of the above embodiment and is used as a positive electrode or a negative electrode of an electrochemical element such as a secondary battery.

The electrode according to the present embodiment can be, for example, a molded article (pellet or the like) obtained by molding an electrode mixture containing the active material or the electrode material, or an electrode having a structure including a current collector and a layer (electrode mixture layer) formed on the current collector from a molded article made of the electrode mixture.

In the case where the active material of the above embodiment is used in the electrode mixture constituting the electrode, necessary materials selected from a conductive assistant, a binder, a solid electrolyte, and the like are contained in the electrode mixture together with the active material. In the case where the electrode material of the above embodiment is used in the electrode mixture constituting the electrode as well, necessary materials selected from a conductive assistant, a binder, a solid electrolyte, and the like can be contained in the electrode mixture together with the electrode material, but the electrode mixture can be constituted only by the electrode material depending on the composition of the electrode material.

Examples of the conductive assistant in the electrode mixture include: carbon materials such as the various types of carbon black described above as conductive assistants that can be used for the electrode material, graphite (natural graphite, artificial graphite), graphene, vapor-grown carbon fiber, carbon nanofiber, and carbon nanotube; and powder and porous bodies made of simple substances or alloys of Cu, Ni, Al, Au, and Pd. One of these can be used alone, or two or more of these can be used in combination. The content of the conductive assistant in the electrode mixture (including an amount of carbon black that can be contained in the electrode material used in the electrode mixture) is preferably 0 to 25 mass%.

It is possible to use, as the binder in the electrode mixture, the above-listed examples of binders that can be used for the electrode material. The electrode material need not contain a binder if it is possible to obtain favorable moldability sufficient to form a molded article from the electrode mixture without using a binder, as in a case where the electrode mixture contains a sulfide-based solid electrolyte (including a case where the electrode material constituting the electrode mixture contains the sulfide-based solid electrolyte), for example.

When the electrode mixture needs to contain a binder, the content of the binder (including an amount of a binder that can be contained in the electrode material used in the electrode mixture) can be preferably 15 mass% or less, and preferably 0.5 mass% or more. On the other hand, when sufficient moldability can be obtained without using a binder due to the electrode mixture containing a sulfide-based solid electrolyte, the content of the binder can be preferably 0.5 mass% or less, more preferably 0.3 mass% or less, and further preferably 0 mass% (i.e., the electrode mixture does not contain a binder).

As the solid electrolyte in the electrode mixture, it is possible to use one or two or more of the various sulfide-based solid electrolytes, hydride-based solid electrolytes, halide-based solid electrolytes, and oxide-based solid electrolytes described above as solid electrolytes that can be used for the electrode material. In order to further enhance the characteristics of the electrochemical element, it is desirable to include a sulfide-based solid electrolyte in the electrode mixture, and it is more desirable to include an argyrodite-type sulfide-based solid electrolyte in the electrode mixture.

From the viewpoint of reducing grain-boundary resistivity, the average particle diameter of the solid electrolyte can be preferably 0.1 µm or more, and more preferably 0.2 µm or more. On the other hand, from the viewpoint of forming a sufficient contact interface between the active material and the solid electrolyte, the average particle diameter of the solid electrolyte can be preferably 10 µm or less, and more preferably 5 µm or less.

The average particle diameter of various particles (solid electrolyte, positive-electrode active material, etc.) referred to in the present specification means a diameter value (D₅₀) at which an integrated percentage on the volume basis reaches 50% when the volume of particles is integrated from small particles using a particle size distribution measurement device (e.g., microtrack particle size distribution measurement device "HRA9320" manufactured by NIKKISO CO., LTD.).

When the electrode mixture contains a solid electrolyte, the content of the solid electrolyte (including an amount of a solid electrolyte that can be contained in the electrode material used in the electrode mixture) can be preferably 4 to 80 mass%.

The content of the active material in the electrode mixture (an amount of the active material used in the electrode mixture or derived from the electrode material) can be preferably 20 to 95 mass%.

In the case where the electrode includes a current collector, any of the following can be used as the current collector. When the electrode is used as the positive electrode of the electrochemical element, it is possible to use, as the current collector, a foil, a punched metal, a net, an expanded metal, or a foamed metal made of aluminum, nickel, stainless steel, or the like; or a carbon sheet, for example. When the electrode is used as the negative electrode of the electrochemical element, it is possible to use, as the current collector, a foil, a punched metal, a net, an expanded metal, or a foamed metal made of copper, nickel, or aluminum; or a carbon sheet, for example.

A molded article made of the electrode mixture can be formed by mixing the active material of the above embodiment or the electrode material of the above embodiment with a conductive assistant, a binder, a solid electrolyte, or the like, which are added as necessary, and compressing the thus prepared electrode mixture through compression molding or the like.

The electrode including a current collector can be produced by affixing the molded article of the electrode mixture formed as described above to the current collector through pressure bonding or the like.

A molded article made of the electrode mixture can also be formed by mixing the electrode mixture and a solvent to prepare an electrode mixture-containing composition, applying this composition to a substrate such as the current collector or a solid electrolyte layer (in the case of forming an all-solid-state battery) to be opposed to the electrode, and performing pressing processing after drying the composition.

Water or an organic solvent such as N-methyl-2-pyrrolidone (NMP) can be used as a solvent in the electrode mixture-containing composition. In a case where a solid electrolyte is also contained in the electrode mixture-containing composition, it is preferable to select a solvent that is less likely to deteriorate the solid electrolyte. In particular, sulfide-based solid electrolytes and hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001 mass% (10 ppm) or less. It is also possible to use fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether.

The thickness of the molded article made of the electrode mixture (in the case of the electrode including the current collector, the thickness of the molded article of the electrode mixture on a side of the current collector, the same applies hereinafter) is generally 50 µm or more, but preferably 200 µm or more from the viewpoint of increasing the capacity of the electrochemical element. In general, the load characteristics of the electrochemical element tend to be improved when the thicknesses of the positive electrode and the negative electrode are reduced, but the electrode of the present embodiment makes it possible to improve the load characteristics even when the molded article of the electrode mixture is as thick as 200 µm or more. Therefore, the effects of the present embodiment are more noticeable when the thickness of the molded article of the electrode mixture is 200 µm or more, for example. The thickness of the molded article of the electrode mixture is generally 3000 µm or less.

In the case of an electrode for an electrochemical element produced by forming an electrode mixture layer on the current collector by using an electrode mixture-containing composition containing a solvent, the thickness of the electrode mixture layer can be preferably 50 to 1000 µm.

### Electrochemical Element

There is no particular limitation on the configuration and structure of an electrochemical element according to the present embodiment so long as the electrochemical element includes a positive electrode and a negative electrode and either the positive electrode or the negative electrode is the electrode for an electrochemical element according to the above embodiment. It is possible to apply various configurations and structures adopted for conventionally-known electrochemical elements such as secondary batteries.

The electrochemical element according to the present embodiment encompasses: secondary batteries such as a secondary battery including an electrolyte solution and a separator disposed between the positive electrode and the negative electrode, and an all-solid-state secondary battery including a solid electrolyte layer between the positive electrode and the negative electrode; a super capacitor; and the like. The following describes a secondary battery, which is a representative form of the electrochemical element according to the present embodiment, in detail.

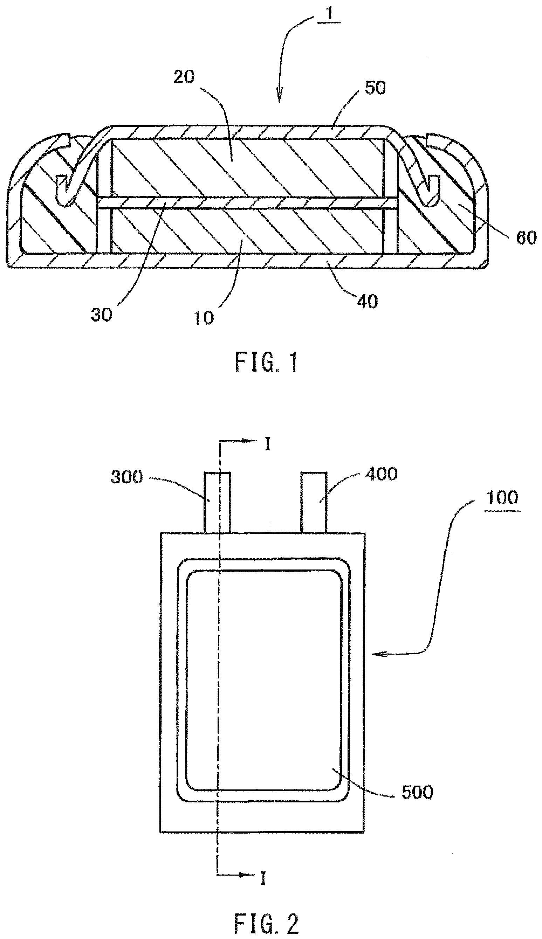

FIG. 1 is a schematic cross-sectional view showing a secondary battery as an example of the electrochemical element according to the present embodiment. A secondary battery 1 shown in FIG. 1 has a configuration in which a positive electrode 10, a negative electrode 20, a separator (a solid electrolyte layer in a case where the secondary battery is an all-solid-state secondary battery) 30 located between the positive electrode 10 and the negative electrode 20, and an electrolyte solution (in a case where the secondary battery includes an electrolyte solution) are sealed in a sheathing body constituted by a sheathing can 40, a sealing can 50, and a resin gasket 60 located therebetween.

The sealing can 50 is fitted into the opening portion of the sheathing can 40 via the gasket 60, and the opening portion of the sheathing can 40 is sealed by fastening the end portion of the opening of the sheathing can 40 inward and thereby bringing the gasket 60 into contact with the sealing can 50. Thus, a structure in which the inside of the battery is hermetically sealed is formed.

A sheathing can and a sealing can that are made of stainless steel or the like can be used. Polypropylene, nylon, or the like can be used as a material of the gasket. When heat resistance is required due to the application of the battery, it is also possible to use fluororesins such as tetrafluoroethylene-perfluoroalkoxyethylene copolymers (PFA), and heat-resistant resins whose melting point is higher than 240°C, such as polyphenylene ether (PPE), polysulfone (PSF), polyarylate (PAR), polyethersulfone (PES), polyphenylene sulfide (PPS), and polyether ether ketone (PEEK). When the battery is used for applications in which heat resistance is required, a glass hermetic seal can also be used to seal the battery.

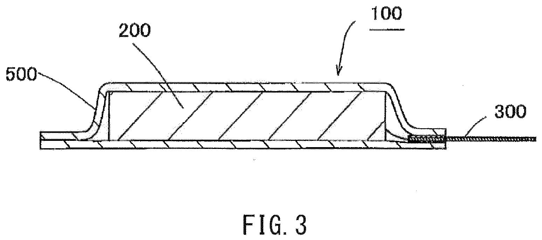

FIGS. 2 and 3 are schematic diagrams showing another example of the secondary battery as an example of the electrochemical element according to the present embodiment. FIG. 2 is a plan view of the secondary battery, and FIG. 3 is a cross-sectional view taken along line I-I in FIG. 2.

A secondary battery 100 shown in FIGS. 2 and 3 has a configuration in which an electrode body 200 is housed in a laminate-film sheathing body 500 formed using two metal laminate films, and the laminate-film sheathing body 500 is sealed by thermally welding the outer peripheral regions of the upper and lower laminate films.

In a case where the secondary battery 100 is an all-solid-state secondary battery, the electrode body 200 is constituted by a stack of a positive electrode, a negative electrode, and a solid electrolyte layer located between the positive electrode and the negative electrode. On the other hand, in a case where the secondary battery 100 is a secondary battery other than the all-solid-state secondary battery, the electrode body 200 is constituted by a stack of a positive electrode, a negative electrode, and a separator located between the positive electrode and the negative electrode, and an electrolyte (e.g., electrolyte solution) is sealed in the laminate-film sheathing body 500 together with the electrode body 200. At least one of the positive electrode and the negative electrode included in the electrode body 200 is the electrode of the above embodiment.

Note that the layers included in the laminate-film sheathing body 500, and the components of the electrode body 200 (the positive electrode, the negative electrode, etc.) are not distinctively shown in FIG. 3 in order to avoid complication in the figure.

The positive electrode included in the electrode body 200 is connected to a positive electrode external terminal 300 inside the battery 100, and the negative electrode included in the electrode body 200 is also connected to a negative electrode external terminal 400 inside the battery 100, which is not shown in the drawings. One end of the positive electrode external terminal 300 and one end of the negative electrode external terminal 400 are drawn out of the laminate-film sheathing body 500 so as to be capable of being connected to external devices and the like.

In the case where the secondary battery is an all-solid-state secondary battery, an electrode produced by using an electrode mixture that contains a solid electrolyte is used as the electrode of the above embodiment. On the other hand, in a case where the secondary battery is a nonaqueous electrolyte secondary battery, the electrode mixture used for the electrode of the above embodiment need not contain a solid electrolyte.

When a nonaqueous electrolyte secondary battery is to be produced by using an electrode that contains the active material of the above embodiment, as the positive electrode, and using a negative electrode that does not contain Li (Li ions) involved in charging and discharging of the battery, it is necessary to introduce Li (Li ions) involved in charging and discharging of the battery into the active material contained in the electrode of the above embodiment. In this case, it is possible to dope the active material of the above embodiment with Li ions in advance using a conventional method (out-of-system pre-doping), for example. Alternatively, when the nonaqueous electrolyte secondary battery includes a nonaqueous electrolyte solution, it is possible to dispose a Li source (metal Li foil, Li alloy foil, etc.) at a place where the Li source can come into contact with the nonaqueous electrolyte solution inside the battery, and dope the active material contained in the electrode of the above embodiment with Li ions inside the battery (in-system pre-doping), for example. In the case of the in-system pre-doping, it is possible to use a pre-doping electrode that is electrically connected to the negative electrode and includes the Li source affixed to the surface of a current collector, for example.

### Negative Electrode of Secondary Battery Including Electrode of the above Embodiment as Positive Electrode

In a case where the positive electrode of a nonaqueous electrolyte secondary battery is the electrode of the above embodiment, the negative electrode can be constituted only by a molded article made of a negative electrode mixture that contains a negative-electrode active material and a conductive assistant, for example, or the negative electrode can have a structure including a current collector and a layer (negative electrode mixture layer) formed on the current collector from a molded article made of the negative electrode mixture, for example.

Examples of the negative-electrode active material include carbon-based materials that can occlude and release lithium, such as graphite, pyrolytic carbons, cokes, glassy carbons, fired bodies of organic polymer compounds, mesophase carbon microbeads (MCMB), and carbon fibers. One of these carbon-based materials or a mixture of two or more of them is used as the negative-electrode active material. It is also possible to use, as the negative-electrode active material: simple substances, compounds, and alloys including elements such as Al, Si, Sn, Ge, Bi, Sb, In, Zn, and P; compounds that can be charged and discharged at low voltage like lithium metal, such as lithium-containing nitrides and lithium-containing sulfides; and lithium metal.

The content of the negative-electrode active material in the negative electrode mixture can be preferably 15 to 100 mass%.

As the conductive assistant in the negative electrode, it is possible to use the above-listed examples of conductive assistants that can be used for the electrode of the above embodiment. The content of the conductive assistant in the negative electrode mixture can be preferably 0.1 to 15 mass%.

In a case where the nonaqueous electrolyte secondary battery including the electrode of the above embodiment as the positive electrode is an all-solid-state secondary battery and the negative-electrode active material is in the form of particles, a solid electrolyte can be included in the negative electrode mixture.

As the solid electrolyte in the negative electrode, it is possible to use one or two or more of the various sulfide-based solid electrolytes, hydride-based solid electrolytes, halide-based solid electrolytes, and oxide-based solid electrolytes described above as solid electrolytes that can be used for the electrode material of the above embodiment. In order to further enhance the battery characteristics, it is desirable to include a sulfide-based solid electrolyte in the negative electrode mixture, and it is more desirable to include an argyrodite-type sulfide-based solid electrolyte in the negative electrode mixture.

The content of the solid electrolyte in the negative electrode mixture can be preferably 4 to 90 mass%.

The negative electrode mixture can contain a binder, but need not contain a binder if it is possible to obtain favorable moldability without using a binder, as in a case where the negative electrode also contains a sulfide-based solid electrolyte, for example. Any of the above-listed examples of binders that can be used for the electrode of the above embodiment can be used.

When the negative electrode mixture needs to contain a binder, the content of the binder can be preferably 15 mass% or less, and preferably 0.5 mass% or more. On the other hand, when the negative electrode mixture need not contain a binder from the viewpoint of moldability, the content of the binder can be preferably 0.5 mass% or less, more preferably 0.3 mass% or less, and further preferably 0 mass% (i.e., the negative electrode mixture does not contain a binder).

In the case where the negative electrode includes a current collector, the current collector can be any of the above-listed examples of current collectors that can be used in the case where the electrode of the above embodiment is used as the negative electrode.

A molded article made of the negative electrode mixture can be formed by mixing the negative-electrode active material with a conductive assistant, a binder, a solid electrolyte, or the like, which are added as necessary, and compressing the thus prepared negative electrode mixture through compression molding or the like. The negative electrode constituted only by the molded article made of the negative electrode mixture can be produced by using this method.

The negative electrode including a current collector can be produced by affixing the molded article of the negative electrode mixture formed as described above to the current collector through pressure bonding or the like.

The negative electrode including a current collector can also be produced by applying a negative electrode mixture-containing composition (e.g., paste or slurry) obtained by dispersing the negative electrode mixture in a solvent, to the current collector, drying the composition, and then performing compression molding such as calendaring as necessary, to form a molded article (negative electrode mixture layer) made of the negative electrode mixture on the surface of the current collector.

Water or an organic solvent such as NMP can be used as a solvent in the negative electrode mixture-containing composition. In a case where a solid electrolyte is also contained in the negative electrode mixture-containing composition, it is desirable to select a solvent that is less likely to deteriorate the solid electrolyte, and it is preferable to use any of the above-listed various examples of solvents that can be used for the electrode mixture-containing composition containing a solid electrolyte.

The thickness of the molded article made of the negative electrode mixture (in the case of the negative electrode including the current collector, the thickness of the molded article of the negative electrode mixture on a side of the current collector, the same applies hereinafter) can be generally 50 µm or more, but preferably 200 µm or more from the viewpoint of increasing the capacity of the battery. The thickness of the molded article made of the negative electrode mixture can be generally 2000 µm or less.

In the case of a negative electrode produced by forming a negative electrode mixture layer on the current collector using a negative electrode mixture-containing composition containing a solvent, the thickness of the negative electrode mixture layer is preferably 50 to 1000 µm.

### Positive Electrode of Secondary Battery Including Electrode of the above Embodiment as Negative Electrode

In a case where the negative electrode of a secondary battery is the electrode of the above embodiment, the positive electrode can be constituted only by a molded article made of a positive electrode mixture that contains a positive-electrode active material and a conductive assistant, for example, or the positive electrode can have a structure including a current collector and a layer (positive electrode mixture layer) formed on the current collector from a molded article (positive electrode mixture layer) made of the positive electrode mixture, for example.

There is no particular limitation on the positive-electrode active material as long as a positive-electrode active material used in a conventionally known secondary battery, namely an active material capable of occluding and releasing Li ions, is employed. Specific examples of the positive-electrode active material include spinel-type lithium manganese composite oxides represented by LiMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and *r* satisfies 0≤r≤1), layered compounds represented by LiᵣMn₍₁₋ₛ₋ᵣ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and *r, s, t, u,* and *v* satisfy 0.8≤r≤1.2, 0<s<0.5, 0≤t≤0.5, u+v<1, -0.1≤u≤0.2, and 0≤v≤0.1), lithium cobalt composite oxides represented by LiCo₁₋ᵣMᵣO₂ (where M is at least one element selected from the group consisting ofAl, Mg, Ti, V, Cr, Zr, Fe, Ni, Cu, Zn, Ga, Ge, Nb, Mo, Sn, Sb, and Ba, and *r* satisfies 0≤r≤0.5), lithium nickel composite oxides represented by LiNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and *r* satisfies 0≤r≤0.5), olivine-type composite oxides represented by Li₁₊ₛMᵢ₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and *r* and s satisfy 0≤r≤0.5 and 0≤s≤1), and pyrophosphoric acid compounds represented by Li₂M₁₋ᵣNᵣP₂O₇ (where M is at least one element selected from the group consisting of Fe, Mn, and Co, N is at least one element selected from the group consisting ofAl, Mg, Ti, Zr, Ni, Cu, Zn, Ga, Ge, Nb, Mo, Sn, Sb, V, and Ba, and *r* satisfies 0≤r≤0.5). These compounds can be used alone or in combination of two or more.

In a case where the secondary battery is an all-solid-state secondary battery, the average particle diameter of the positive-electrode active material is preferably 1 µm or more, and more preferably 2 µm or more. Also, the average particle diameter is preferably 10 µm or less, and more preferably 8 µm or less. The positive-electrode active material can be in the form of primary particles or secondary particles formed by aggregated primary particles. When a positive-electrode active material having an average particle diameter within the above range is used, many interfaces between the positive-electrode active material and a solid electrolyte included in the positive electrode can be secured, and accordingly, the load characteristics of the battery are further improved.

In the case where the secondary battery is an all-solid-state secondary battery, the positive-electrode active material preferably includes, on its surface, a reaction suppressing layer for suppressing a reaction between the positive-electrode active material and the solid electrolyte included in the positive electrode.

If the positive-electrode active material comes into direct contact with the solid electrolyte in the molded article made of the positive electrode mixture, there is a risk that the solid electrolyte will be oxidized and a resistive layer will be formed, which leads to a reduction in ion conductivity in the molded article. It is possible to suppress the reduction in ion conductivity in the molded article due to oxidation of the solid electrolyte by providing the reaction suppressing layer for suppressing a reaction with the solid electrolyte on the surface of the positive-electrode active material to prevent direct contact between the positive-electrode active material and the solid electrolyte.

The reaction suppressing layer is only required to be made of a material that has ion conductivity and can suppress a reaction between the positive-electrode active material and the solid electrolyte. Examples of materials that can constitute the reaction suppressing layer include oxides that include Li and at least one element selected from the group consisting of Nb, P, B, Si, Ge, Ti, and Zr, or more specifically, Nb-containing oxides such as LiNbO₃, and Li₃PO₄, Li₃BO₃, Li₄SiO₄, Li₄GeO₄, LiTiO₃, LiZrO₃, and Li₂WO₄. The reaction suppressing layer can contain only one of these oxides, two or more of these oxides, or a composite compound formed by two or more of these oxides. Among these oxides, Nb-containing oxides are preferably used, and LiNbO₃ is more preferably used.

Preferably, 0.1 to 1.0 part by mass of the reaction suppressing layer can be present on the surface of the positive-electrode active material relative to 100 parts by mass of the positive-electrode active material. If the amount of the reaction suppressing layer is within this range, it is possible to favorably suppress a reaction between the positive-electrode active material and the solid electrolyte.

The reaction suppressing layer can be formed on the surface of the positive-electrode active material using a sol-gel method, a mechano-fusion method, a CVD method, a PVD method, an ALD method, or the like.

The content of the positive-electrode active material in the positive electrode mixture can be preferably 20 to 95 mass%.

As the conductive assistant in the positive electrode, it is possible to use the above-listed examples of conductive assistants that can be used for the electrode of the above embodiment. The content of the conductive assistant in the positive electrode mixture can be preferably 0.1 to 15 mass%.

In the case where the secondary battery is an all-solid-state secondary battery, a solid electrolyte is included in the positive electrode mixture.

As the solid electrolyte contained in the positive electrode, it is possible to use one or two or more of the various sulfide-based solid electrolytes, hydride-based solid electrolytes, halide-based solid electrolytes, and oxide-based solid electrolytes described above as solid electrolytes that can be used for the electrode material of the above embodiment. In order to further enhance the battery characteristics, it is desirable to include a sulfide-based solid electrolyte in the positive electrode mixture, and it is more desirable to include an argyrodite-type sulfide-based solid electrolyte in the positive electrode mixture.

The content of the solid electrolyte in the positive electrode mixture can be preferably 4 to 80 mass%.

The positive electrode mixture can contain a binder, but need not contain a binder if it is possible to obtain favorable moldability without using a binder, as in a case where the positive electrode also contains a sulfide-based solid electrolyte, for example. Any of the above-listed examples of binders that can be used for the electrode of the above embodiment can be used.

When the positive electrode mixture needs to contain a binder, the content of the binder can be preferably 15 mass% or less, and preferably 0.5 mass% or more. On the other hand, when the positive electrode mixture need not contain a binder from the viewpoint of moldability, the content of the binder can be preferably 0.5 mass% or less, more preferably 0.3 mass% or less, and further preferably 0 mass% (i.e., the positive electrode mixture does not contain a binder).

In the case where the positive electrode includes a current collector, the current collector can be any of the above-listed examples of current collectors that can be used in the case where the electrode of the above embodiment is used as the positive electrode.

A molded article made of the positive electrode mixture can be formed by mixing the positive-electrode active material and the conductive assistant with a binder, a solid electrolyte, or the like, which are added as necessary, and compressing the thus prepared positive electrode mixture through compression molding or the like. The positive electrode constituted only by the molded article made of the positive electrode mixture can be produced using this method.

The positive electrode including a current collector can be produced by affixing the molded article of the positive electrode mixture formed as described above to the current collector through pressure bonding or the like.

The positive electrode including a current collector can also be produced by applying a positive electrode mixture-containing composition (e.g., paste or slurry) obtained by dispersing the positive electrode mixture in a solvent, to the current collector, drying the composition, and then performing compression molding such as calendaring as necessary, to form a molded article (positive electrode mixture layer) made of the positive electrode mixture on the surface of the current collector.

An organic solvent such as NMP can be used as the solvent in the positive electrode mixture-containing composition. In a case where a solid electrolyte is also contained in the positive electrode mixture-containing composition, it is desirable to select a solvent that is less likely to deteriorate the solid electrolyte, and it is preferable to use any of the above-listed various examples of solvents that can be used for the electrode mixture-containing composition containing a solid electrolyte.

The thickness of the molded article made of the positive electrode mixture (in the case of the positive electrode including the current collector, the thickness of the molded article of the positive electrode mixture on a side of the current collector, the same applies hereinafter) can be generally 50 µm or more, but preferably 200 µm or more from the viewpoint of increasing the capacity of the battery. The thickness of the molded article made of the positive electrode mixture can be generally 2000 µm or less.

In the case of a positive electrode produced by forming a positive electrode mixture layer on the current collector using a positive electrode mixture-containing composition containing a solvent, the thickness of the positive electrode mixture layer can be preferably 50 to 1000 µm.

### Solid Electrolyte Layer

In the case where the secondary battery is an all-solid-state secondary battery, it is possible to use, as the solid electrolyte in the solid electrolyte layer located between the positive electrode and the negative electrode, one or two or more of the various sulfide-based solid electrolytes, hydride-based solid electrolytes, halide-based solid electrolytes, and oxide-based solid electrolytes described above as solid electrolytes that can be used for the electrode material of the above embodiment. In order to further enhance the battery characteristics, it is desirable that the solid electrolyte layer contain a sulfide-based solid electrolyte, and it is more desirable that the solid electrolyte layer contain an argyrodite-type sulfide-based solid electrolyte. It is yet more desirable that all of the positive electrode, the negative electrode, and the solid electrolyte layer contain a sulfide-based solid electrolyte, and it is further desirable that all of these contain an argyrodite-type sulfide-based solid electrolyte.

The solid electrolyte layer can include a porous material such as nonwoven fabric made of a resin, as a support.

The solid electrolyte layer can be formed using a method in which a solid electrolyte is compressed through compression molding or the like, or a method in which a composition for forming a solid electrolyte layer that is prepared by dispersing a solid electrolyte in a solvent is applied to a substrate, the positive electrode, or the negative electrode and is then dried, and compression molding such as pressing processing is optionally performed, for example.

As the solvent used in the composition for forming a solid electrolyte layer, it is desirable to select a solvent that is less likely to deteriorate the solid electrolyte, and it is preferable to use any of the above-listed various examples of solvents that can be used for the electrode mixture-containing composition containing a solid electrolyte.

The thickness of the solid electrolyte layer can be preferably 10 to 500 µm.

### Separator

In a case where the secondary battery is a battery other than the all-solid-state secondary battery, a separator disposed between the positive electrode and the negative electrode preferably has sufficient strength and is capable of retaining a large amount of nonaqueous electrolyte. From this viewpoint, it is preferable to use a microporous film, nonwoven fabric, or the like that has a thickness of 10 to 50 µm and a porosity ratio of 30% to 70% and contains polyethylene, polypropylene, or an ethylene-propylene copolymer.

### Nonaqueous Electrolyte

In the case where the secondary battery is a battery other than the all-solid-state secondary battery, a nonaqueous liquid electrolyte (hereinafter referred to as a "nonaqueous electrolyte solution") is commonly used as the electrolyte. The nonaqueous electrolyte solution is obtained by dissolving an electrolyte salt such as a lithium salt in an organic solvent. There is no particular limitation on the organic solvent, and examples thereof include: chain esters such as dimethyl carbonate, diethyl carbonate, ethyl methyl carbonate, and methyl propyl carbonate; cyclic esters having a high dielectric constant such as ethylene carbonate, propylene carbonate, butylene carbonate, and vinylene carbonate; and mixed solvents obtained by mixing chain esters and cyclic esters. In particular, a mixed solvent obtained by mixing a chain ester, which is the main solvent, and a cyclic ester is suitably used.

Examples of the electrolyte salt dissolved in the organic solvent to prepare the nonaqueous electrolyte solution include LiPF₆, LiBF₄, LiAsF₆, LiSbF₆, LiCF₃SO₃, LiC₄F₉SO₃, LiCF₃CO₂, Li₂C₂F₄(SO₃)₂, LiCₙF₂ₙ₊₁SO₃ (n≥2), LiN(RfSO₂)(Rf'SO₂), LiC(RfSO₂)₃, and LiN(RfOSO₂)₂ [where Rf and Rf' are fluoroalkyl groups]. One of these is used alone or a mixture of two or more of these is used. The concentration of the electrolyte salt in the nonaqueous electrolyte solution is not particularly limited, but can be preferably 0.3 mol/l or more, and more preferably 0.4 mol/l or more. Also, the concentration can be preferably 1.7 mol/l or less, and more preferably 1.5 mol/l or less.

Other than the nonaqueous electrolyte solution, it is also possible to use, as the nonaqueous electrolyte in the secondary battery, a gel electrolyte obtained by forming a gel from the nonaqueous electrolyte solution using a gelling agent made of a polymer or the like.

### Aqueous Electrolyte

In the case where the negative electrode of the secondary battery is the electrode of the above embodiment, it is also possible to use an aqueous electrolyte. An example of the aqueous electrolyte is a composition obtained by mixing more than 4 mol to 15 mol of water with 1 mol of an alkali metal salt including an organic anion having a fluoroalkyl group, as a constituent.

### Electrode Body

The positive electrode and the negative electrode can be used for a battery in the form of a layered electrode body obtained by layering these electrodes with the solid electrolyte layer or the separator being located therebetween or in the form of a wound electrode body obtained by winding the layered electrode body.

Note that it is preferable to form the electrode body including the solid electrolyte layer by performing compression molding in the state in which the positive electrode, the negative electrode, and the solid electrolyte layer are layered from the viewpoint of enhancing the mechanical strength of the electrode body.

### Form of Battery

The secondary battery can be in the form that includes a sheathing body having a metal sheathing can with a closed-ended tubular shape (e.g., cylindrical shape or polygonal tubular shape) and a sealing structure for sealing the opening thereof, instead of the form as shown in FIG. 1 that includes a sheathing body constituted by a sheathing can, a sealing can, and a gasket, namely the form that is generally called a coin-shaped battery or button-shaped battery, and the form as shown in FIGS. 2 and 3 that includes a sheathing body constituted by resin films or metal-resin laminate films.

### Examples

Hereinafter, the present invention will be described in detail based on examples. However, the present invention is not limited to the following examples.

### Example 1

### Synthesis of Active Material

An active material was synthesized from powders of various metal oxides (all obtained from Kojundo Chemical Laboratory Co., Ltd.), which were used as starting materials, by using a solid phase reaction method. 14.507 g of Nb₂O₅ (purity: >99.9%), 427.6 mg of α-Al₂O₃ (purity: >99.99%), and 80.3 mg of ZnO (purity: >99.99%) were weighed and mixed. The mixture of the starting materials, 15 g of ethanol, and 120 g of YSZ balls having a diameter of 5 mm were placed in a container made of zirconia and having a capacity of 500 ml and mixed for 3 hours at 250 rpm using a planetary ball mill ["Planetary Mill Pulverisette 5" (product name) manufactured by Fritsch GmbH]. The zirconia balls were separated from the mixed sample, and the thus obtained slurry was dried to obtain precursor powder of the active material. The precursor powder was transferred to an alumina crucible and heated to 1150°C at a rate of 16°C/minute in the air atmosphere, then kept at the temperature for 8 hours, and cooled to room temperature through natural cooling. The obtained powder was crushed for 5 minutes using a mortar, and then filtered through a sieve having an opening size of 150 µm to obtain a crude product of the active material. 4 g of the crude product of the active material, 4 g of ethanol, and 30 g of YSZ balls having a diameter of 5 mm were placed in a container made of zirconia and having a capacity of 12.5 ml and crushed for 3 hours at 250 rpm using the planetary ball mill. The thus obtained slurry was dried in a vacuum at 60°C overnight, whereby Zn_{0.1}Al_{0.85}Nb_{11.05}O₂₉ was obtained. A powder XRD pattern of the obtained Zn_{0.1}Al_{0.85}Nb_{11.05}O₂₉ was measured to confirm that the active material had a monoclinic crystal structure.

### Formation of Solid Electrolyte Layer

80 mg of a sulfide-based solid electrolyte (Li_{5.4}PS_{4.2}Cl_{0.8}Br_{0.8}) was placed in a cylinder made of a reinforced resin and having a diameter of 10 mm, and molded at a pressure of 1000 kgf/cm² using a pressing machine to form a solid electrolyte layer.

### Manufacture of Positive Electrode

The synthesized Zn_{0.1}Al_{0.85}Nb_{11.05}O₂₉ (active material), the same sulfide-based solid electrolyte as that used for the solid electrolyte layer, and graphene (conductive assistant) were mixed at a mass ratio of 60:33:7, and kneaded well to prepare a positive electrode mixture. Next, 15 mg of the positive electrode mixture was placed on the solid electrolyte layer in the cylinder made of the reinforced resin, and molded at a pressure of 4000 kgf/cm² using the pressing machine to form a positive electrode constituted by a molded article made of the positive electrode mixture on the solid electrolyte layer. Thus, a stack of the positive electrode and the solid electrolyte layer was obtained.

### Assembly of Sheet-Shaped All-Solid-State Secondary Battery

A negative electrode constituted by a lithium metal plate having a diameter of 10 mm and a thickness of 100 µm and an indium metal plate having a diameter of 10 mm and a thickness of 100 µm, which were produced through rolling and affixed to each other, was placed on the solid electrolyte layer side of the stack, and then SUS circular plates each having a diameter of 10 mm and a thickness of 1 mm were respectively placed on the positive electrode side and the negative electrode side and fixed to obtain a layered electrode body. A sheet-shaped all-solid-state battery similar to that shown in FIG. 2 was produced using the layered electrode body. A positive electrode current collector foil (SUS foil) and a negative electrode current collector foil (SUS foil) were affixed side by side with a certain distance therebetween to an inner surface of an aluminum laminate film constituting a laminate-film sheathing body. The current collector foils were each obtained by cutting a sheet of the foil into a shape including a main body portion to be opposed to the positive electrode side surface or the negative electrode side surface of the layered electrode body and a portion protruding from the main body portion to the outside of the battery and serving as the positive electrode external terminal 300 or the negative electrode external terminal 400.

The layered electrode body was placed on the negative electrode current collector foil on the laminate-film sheathing body, and wrapped with the laminate-film sheathing body such that the positive electrode current collector foil was placed on the positive electrode of the layered electrode body, and the remaining three sides of the laminate-film sheathing body were thermally welded and sealed in a vacuum to obtain a sheet-shaped all-solid-state secondary battery.

### Example 2

A sheet-shaped all-solid-state secondary battery was produced in the same manner as in Example 1, except that the active material was changed to monoclinic Zn_{0.2}Al_{0.7}Nb_{11.1}O₂₉. It was confirmed that the active material used in the positive electrode had a monoclinic crystal structure in the same manner as in Example 1.

### Example 3

A sheet-shaped all-solid-state secondary battery was produced in the same manner as in Example 1, except that the active material was changed to monoclinic Zn_{0.3}Al_{0.55}Nb_{11.15}O₂₉. It was confirmed that the active material used in the positive electrode had a monoclinic crystal structure in the same manner as in Example 1.

### Example 4

A sheet-shaped all-solid-state secondary battery was produced in the same manner as in Example 1, except that the active material was changed to monoclinic Cu_{0.1}Al_{0.85}Nb_{11.05}O₂₉. It was confirmed that the active material used in the positive electrode had a monoclinic crystal structure in the same manner as in Example 1.

### Example 5

A sheet-shaped all-solid-state secondary battery was produced in the same manner as in Example 1, except that the active material was changed to monoclinic Cu_{0.2}Al_{0.7}Nb_{11.1}O₂₉. It was confirmed that the active material used in the positive electrode had a monoclinic crystal structure in the same manner as in Example 1.

### Example 6

A sheet-shaped all-solid-state secondary battery was produced in the same manner as in Example 1, except that the active material was changed to monoclinic Cu_{0.3}Al_{0.55}Nb_{11.15}O₂₉. It was confirmed that the active material used in the positive electrode had a monoclinic crystal structure in the same manner as in Example 1.

### Comparative Example 1

A sheet-shaped all-solid-state secondary battery was produced in the same manner as in Example 1, except that the active material was changed to monoclinic AlNb₁₁O₂₉. It was confirmed that the active material used in the positive electrode had a monoclinic crystal structure in the same manner as in Example 1.

### Comparative Example 2

A sheet-shaped all-solid-state secondary battery was produced in the same manner as in Example 1, except that the active material was changed to monoclinic Zn_{0.67}Nb_{11.33}O₂₉ (Zn₂Nb₃₄O₈₇). It was confirmed that the active material used in the positive electrode had a monoclinic crystal structure in the same manner as in Example 1.

### Comparative Example 3

A sheet-shaped all-solid-state secondary battery was produced in the same manner as in Example 1, except that the active material was changed to monoclinic Zn_{0.566}Al_{0.1}Nb_{11.31}O₂₉. It was confirmed that the active material used in the positive electrode had a monoclinic crystal structure in the same manner as in Example 1.

### Comparative Example 4

A sheet-shaped all-solid-state secondary battery was produced in the same manner as in Example 1, except that the active material was changed to monoclinic Ti₂Nb₁₀O₂₉. It was confirmed that the active material used in the positive electrode had a monoclinic crystal structure in the same manner as in Example 1.

### Comparative Example 5

A sheet-shaped all-solid-state secondary battery was produced in the same manner as in Example 1, except that the active material was changed to monoclinic TiNb₂O₇. It was confirmed that the active material used in the positive electrode had a monoclinic crystal structure in the same manner as in Example 1.

The following evaluation was performed on each of the sheet-shaped all-solid-state secondary batteries of the examples and the comparative examples.

### Evaluation of Load Characteristics

Each of the sheet-shaped all-solid-state secondary batteries of the examples and the comparative examples was restricted under a pressure of 1000 kg/cm², constant-current discharging was performed at a current value of 0.05 C until the voltage reached 0.38 V, subsequently constant-voltage discharging was performed until the current value reached 0.01 C, and then constant-current charging was performed at a current value of 0.05 C until the voltage reached 1.88 V to measure a charging capacity (initial capacity). Next, each battery was subjected to constant-current discharging, constant-voltage discharging, and constant-current charging under the same conditions as those in the measurement of the initial capacity, and again subjected to constant-current discharging and constant-voltage discharging under the same conditions as those in the measurement of the initial capacity, and then constant-current charging was performed at a current value of 0.24 C until the voltage reached 1.88 V to measure a charging capacity (0.24 C charging capacity). For each battery, the 0.24 C charging capacity was divided by the initial capacity to obtain a capacity retention rate, and the load characteristics were evaluated based on the capacity retention rate.

### Charge-Discharge Cycle Characteristics

The 0.24 C charging capacity was measured for each of the sheet-shaped all-solid-state secondary batteries of the examples and the comparative examples after performing two charge-discharge cycles under the same conditions as those in the evaluation of the load characteristics, and then measurement of an open-circuit voltage was performed for 1 hour. Thereafter, constant-current charging was performed at a current value of 0.1 C until the voltage reached 1.88 V, again measurement of the open-circuit voltage was performed for 1 hour, and then step charging was performed under constant-current conditions at a current value of 0.05 C until the voltage reached 1.88 V. Then, the sum (0.05 C charging capacity) of all constant-current step charging capacities measured at the current values of 0.24 C, 0.1 C, and 0.05 C was calculated. For each battery, the 0.05 C charging capacity was divided by the initial capacity, and the quotient expressed as a percentage was taken as a capacity retention rate. The charge-discharge cycle characteristics were evaluated based on the capacity retention rate.

Results of the above evaluation are shown in Table 1 together with the compositions and physical properties of the active materials. "α" in a column under "Active material" in Table 1 means the value of α in the general formula (1), and "d₀₁₀" means the value of interplanar spacing of the (010) plane determined through an X-ray diffraction method (the same applies to Table 3 shown below).

**Table 1**

| | Active material | | | Sheet-shaped all-solid-state secondary battery | |
|---|---|---|---|---|---|
| | Compositional formula | α | d₀₁₀(Å) | Load characteristics capacity retention rate (%) | Charge-discharge cycle characteristics capacity retention rate (%) |
| Ex. 1 | Zn_{0.1}Al_{0.85}Nb_{11.05}O₂₉ | 0.1 | 3.819 | 88 | 94 |
| Ex. 2 | Zn_{0.2}Al_{0.7}Nb_{11.1}O₂₉ | 0.2 | 3.822 | 86 | 100 |
| Ex. 3 | Zn_{0.3}Al_{0.55}Nb_{11.15}O₂₉ | 0.3 | 3.825 | 85 | 95 |
| Ex. 4 | Cu_{0.1}Al_{0.85}Nb_{11.05}O₂₉ | 0.1 | 3.819 | 91 | 96 |
| Ex. 5 | Cu_{0.2}Al_{0.7}Nb_{11.1}O₂₉ | 0.2 | 3.822 | 91 | 97 |
| Ex. 6 | Cu_{0.3}Al_{0.55}Nb_{11.11}O₂₉ | 0.3 | 3.827 | 89 | 96 |
| Com. Ex. 1 | AlNb₁₁O₂₉ | 0 | 3.817 | 84 | 93 |
| Com. Ex. 2 | Zn_{0.67}Nb_{11.33}O₂₉ | 0.67 | 3.833 | 79 | 92 |
| Com. Ex. 3 | Zn_{0.566}Al_{0.1}Nb_{11.31}O₂₉ | 0.566 | 3.831 | 66 | 68 |
| Com. Ex. 4 | Ti₂Nb₁₀O₂₉ | - | 3.817 | 64 | 86 |
| Com. Ex. 5 | TiNb₂O₇ | - | 3.805 | 69 | 80 |

As shown in Table 1, in the cases of the sheet-shaped all-solid-state secondary batteries of Examples 1 to 6 including the positive electrode containing an oxide represented by the general formula (1) as the active material, high capacity retention rates were obtained in both the evaluation of the load characteristics and the evaluation of the charge-discharge cycle characteristics, and the batteries had excellent load characteristics and excellent charge-discharge cycle characteristics.

On the other hand, in the cases of the battery of Comparative Example 1 including the positive electrode containing an oxide that does not include the element M¹, as the active material, the batteries of Comparative Examples 2, 4, and 5 including the positive electrode containing an oxide that does not include Al, as the active material, and the battery of Comparative Example 3 including the positive electrode containing, as the active material, an oxide in which the amount of the element M¹ was inappropriate, capacity retention rates were lower than those of the batteries of the examples in both the evaluation of the load characteristics and the evaluation of the charge-discharge cycle characteristics, and the batteries were inferior in the load characteristics and charge-discharge cycle characteristics.

### Example 7

### Preparation of Positive Electrode Material

0.86 g of lithium and 38.7 g of pentaethoxy niobium were mixed in 394 g of dehydrated ethanol to prepare a coating solution for forming a reaction suppressing layer. Next, the coating solution for forming a reaction suppressing layer was applied at a rate of 2 g/minute to 1000 g of a positive-electrode active material (LiNi_{0.5}Mn_{1.5}O₄) using a coating machine including a tumbling fluidized bed. The thus obtained powder was subjected to heat treatment at 350°C to obtain a positive electrode material in which 2 parts by mass of a reaction suppressing layer made of LiNbO₃ was formed on the surface of the positive-electrode active material relative to 100 parts by mass of the positive-electrode active material.

A positive electrode mixture was prepared by mixing the positive electrode material, vapor-grown carbon fiber (conductive assistant), and Li_{5.8}PS_{4.6}Cl_{1.6} (sulfide-based solid electrolyte). The positive electrode material, the conductive assistant, and the sulfide-based solid electrolyte were mixed at a mass ratio of 67:4:29. 102 mg of the positive electrode mixture was placed in a powder-molding mold having a diameter of 7.5 mm, and molded at a pressure of 1000 kgf/cm² using a pressing machine to obtain a positive electrode constituted by a molded article made of the positive electrode mixture and having a columnar shape.

### Formation of Solid Electrolyte Layer

17 mg of the same sulfide-based solid electrolyte as that used for the positive electrode was placed on the positive electrode in the powder-molding mold, and molded at a pressure of 1000 kgf/cm² using the pressing machine to form a solid electrolyte layer on the molded article made of the positive electrode mixture.

### Manufacture of Negative Electrode

Monoclinic Zn_{0.1}Al_{0.85}Nbi_{11.05}O₂₉ (negative electrode active material), a sulfide-based solid electrolyte (Li_{5.4}PS_{4.2}Cl_{0.8}Br_{0.8}), and graphene (conductive assistant) were mixed at a mass ratio of 60:33:7, and kneaded well to prepare a negative electrode mixture. Next, 67 mg of the negative electrode mixture was placed on the solid electrolyte layer in the powder-molding mold, and molded at a pressure of 10000 kgf/cm² using the pressing machine to form a negative electrode constituted by a molded article made of the negative electrode mixture on the solid electrolyte layer. Thus, a layered electrode body constituted by a stack of the positive electrode, the solid electrolyte layer, and the negative electrode was obtained.

### Assembly of All-Solid-State Battery

Two flexible graphite sheets "PERMA-FOIL (product name)" (thickness: 0.1 mm, apparent density: 1.1 g/cm³) manufactured by TOYO TANSO CO., LTD., and punched into the same size as the layered electrode body were prepared, and one of the sheets was placed on the inner bottom surface of a sealing can that was made of stainless steel and into which a ring-shaped polypropylene gasket had been fitted. Next, the layered electrode body was overlaid on the graphite sheet with the negative electrode disposed on the graphite sheet side, the other graphite sheet was placed on the layered electrode body, and covered with a sheathing can made of stainless steel, and then the end portion of the opening of the sheathing can was swaged inward and sealed to obtain a flat-shaped all-solid-state secondary battery having a diameter of about 9 mm and including the graphite sheets respectively located between the inner bottom surface of the sealing can and the stack and between the inner bottom surface of the sheathing can and the layered electrode body.

### Example 8

A flat-shaped all-solid-state secondary battery was produced in the same manner as in Example 7, except that the negative electrode active material was changed to monoclinic Cu_{0.1}Al_{0.85}Nb_{11.05}O₂₉.

### Comparative Example 6

A flat-shaped all-solid-state secondary battery was produced in the same manner as in Example 7, except that the negative electrode active material was changed to monoclinic AlNb₁₁O₂₉.

The following evaluation was performed on each of the flat-shaped all-solid-state secondary batteries of Examples 7 and 8 and Comparative Example 6.

### Load Characteristics

Each of the all-solid-state batteries of Examples 7 and 8 and Comparative Example 6 was subjected to constant-current charging at a current value of 0.07 C until the voltage reached 3.8 V, subsequently subjected to constant-voltage charging until the current value reached 0.005 C, and then subjected to constant-current discharging at a current value of 0.07 C until the voltage reached 1.5 V to obtain an initial capacity. Constant-current charging and constant-voltage charging were performed again, and then constant-current step discharging was performed to measure discharging capacities (constant-current step discharging capacities) at respective current values. The constant-current step discharging was performed by subjecting the charged battery to constant-current discharging at a current value of 0.6 C until the voltage reached 1.5 V, next to constant-current discharging at a current value of 0.3 C until the voltage reached to 1.5 V, and then to constant-current discharging at a current value of 0.1 C until the voltage reached 1.5 V The sum (0.1 C discharging capacity) of all constant-current step discharging capacities measured at the current values from 0.6 C to 0.1 C was calculated, and a 0.6 C discharging capacity (the same as the step discharging capacity measured by discharging the battery at 0.6 C during the constant-current step discharging) was divided by the 0.1 C discharging capacity to evaluate the load characteristics.

### Charge-Discharge Cycle Characteristics

Each of the all-solid-state batteries of Examples 7 and 8 and Comparative Example 6 was subjected to constant-current charging at a current value of 0.07 C until the voltage reached 3.8 V, subsequently subjected to constant-voltage charging until the current value reached 0.005 C, and then subjected to constant-current discharging at a current value of 0.07 C until the voltage reached 1.5 V to obtain an initial capacity. Constant-current charging was performed again at a current value of 0.07 C until the voltage reached 3.8 V, subsequently constant-voltage charging was performed until the current value reached 0.005 C, and then constant-current step discharging was performed to measure discharging capacities (constant-current step discharging capacities) at respective current values. The constant-current step discharging was performed by subjecting the charged battery to constant-current discharging at a current value of 0.6 C until the voltage reached 1.5 V, next to constant-current discharging at a current value of 0.3 C until the voltage reached to 1.5 V, and then to constant-current discharging at a current value of 0.1 C until the voltage reached 1.5 V The sum (0.1 C discharging capacity) of all constant-current step discharging capacities measured at the current values from 0.6 C to 0.1 C was calculated. Subsequently, for each of the batteries, constant-current charging was performed at a current value of 0.3 C until the voltage reached 3.8 V, constant-voltage charging was performed until the current value reached 0.005 C, and then constant-current step discharging was performed at the current values from 0.6 C to 0.1 C under the same conditions as those described above to measure a 0.1 C discharging capacity.

Out of the series of charging and discharging operations described above, operations performed in the measurement of the initial capacity were taken as the first cycle, and the last operations in which constant-voltage charging was performed at a current value of 0.3 C and subsequently constant-current step discharging was performed were taken as the third cycle. The charge-discharge cycle characteristics were evaluated by dividing the 0.1 C discharging capacity of the third cycle by the 0.1 C discharging capacity of the charge-discharge cycle (second cycle) in which constant-current charging was performed at a current value of 0.1 C.

Table 2 shows results of the above evaluation of the all-solid-state batteries of Examples 7 and 8 and Comparative Example 6 as relative values with the result of the all-solid-state battery of Comparative Example 6 taken as 100.

**Table 2**

| | Compositional formula of negative electrode active material | Flat-shaped all-solid-state secondary battery | |
|---|---|---|---|
| | | Load characteristics capacity retention rate (%) | Charge-discharge cycle characteristics capacity retention rate (%) |
| Ex. 7 | Zn_{0.1}Al_{0.85}Nb_{11.05}O₂₉ | 1456 | 102 |
| Ex. 8 | Cu_{0.1}Al_{0.85}Nb_{11.05}O₂₉ | 1535 | 101 |
| Com. Ex. 6 | AlNb₁₁O₂₉ | 100 | 100 |

As shown in Table 2, in the cases of the flat-shaped all-solid-state secondary batteries of Examples 7 and 8 including the negative electrode containing an oxide represented by the general formula (1) as the active material, high capacity retention rates were obtained in both the evaluation of the load characteristics and the evaluation of the charge-discharge cycle characteristics, and the batteries had excellent load characteristics and excellent charge-discharge cycle characteristics.

On the other hand, in the case of the battery of Comparative Example 6 including the negative electrode containing an oxide that does not include the element M¹, as the active material, capacity retention rates were lower than those of the batteries of the examples in both the evaluation of the load characteristics and the evaluation of the charge-discharge cycle characteristics, and the battery was inferior in the load characteristics and charge-discharge cycle characteristics.

### Example 9

A sheet-shaped all-solid-state secondary battery was produced in the same manner as in Example 1, except that the active material was changed to monoclinic Cu_{0.21}Al_{0.74}Nb_{11.05}O_{27.89}. It was confirmed that the active material had a monoclinic crystal structure in the same manner as in Example 1. The composition of the active material was determined through ICP-AES measurement and measurement performed using an oxygen nitrogen analysis device.

### Example 10

A mixture of various metal oxide powders (all obtained from Kojundo Chemical Laboratory Co., Ltd.) was placed in a container made of carbon, and reduction treatment was performed by firing the mixture at 1000°C for 4 hours in a vacuum atmosphere at a pressure of 100 Pa or less, whereby monoclinic Cu_{0.14}Al_{0.73}Nb_{11.13}O_{28.00} was obtained. A sheet-shaped all-solid-state secondary battery was produced in the same manner as in Example 1, except that the active material was changed to the monoclinic Cu_{0.14}Al_{0.73}Nb_{11.13}O_{28.00}. It was confirmed that the active material had a monoclinic crystal structure in the same manner as in Example 1. The composition of the active material was determined through ICP-AES measurement and measurement performed using an oxygen nitrogen analysis device.

### Example 11

A sheet-shaped all-solid-state secondary battery was produced in the same manner as in Example 1, except that the active material was changed to monoclinic Fe_{0.20}Al_{0.83}Nb_{10.97}O_{28.23}. It was confirmed that the active material had a monoclinic crystal structure in the same manner as in Example 1. The composition of the active material was determined through ICP-AES measurement and measurement performed by using an oxygen nitrogen analysis device.

### Comparative Example 7

A sheet-shaped all-solid-state secondary battery was produced in the same manner as in Example 1, except that the active material was changed to monoclinic Al_{0.87}Nb_{11.13}O_{28.47} subjected to the reduction treatment. It was confirmed that the active material had a monoclinic crystal structure in the same manner as in Example 1. The composition of the active material was determined through ICP-AES measurement and measurement performed using an oxygen nitrogen analysis device.

For each of the sheet-shaped all-solid-state secondary batteries of Examples 9 to 11 and Comparative Example 7, the load characteristics and the charge-discharge cycle characteristics were evaluated in the same manner as in the case of the battery of Example 1 and the like, except that the discharging lower limit voltage was changed to 0.18 V, and an energy density per weight of the active material was calculated by dividing the battery capacity by the weight of the active material contained in the electrode.

For each of the sheet-shaped all-solid-state secondary batteries of Examples 9 to 11 and Comparative Example 7, the composition and physical properties of the active material are shown in Tables 3 and 4, and results of the above evaluation are shown in Table 5. In the column of "Reduction treatment" in Table 3, "Yes" means that the reduction treatment was performed, and "No" means that the reduction treatment was not performed.

**Table 3**

| | Active material | | | |
|---|---|---|---|---|
| | Compositional formula | α | d₀₁₀ (Å) | Reduction treatment |
| Ex. 9 | Cu_{0.21}Al_{0.74}Nb_{11.05}O_{27.89} | 0.21 | 3.828 | No |
| Ex. 10 | Cu_{0.14}Al_{0.73}Nb_{11.13}O_{28.00} | 0.14 | 3.833 | Yes |
| Ex. 11 | Fe_{0.20}Al_{0.83}Nb_{10.97}O_{28.23} | 0.20 | 3.824 | No |
| Com. Ex. 7 | Al_{0.87}Nb_{11.13}O_{28.47} | 0 | 3.831 | Yes |

**Table 4**

| | Active material | | | | | |
|---|---|---|---|---|---|---|
| | Z (atomic %) | Absorbance | | | P (atomic %) | Q (atomic %) |
| | | A1 | A2 | A3 | | |
| Ex. 9 | 3.22 | 0.982 | 0.998 | 1.009 | 3.3 | 1.9 |
| Ex. 10 | 5.21 | 0.826 | 0.858 | 0.847 | 9.4 | 1.3 |
| Ex. 11 | 3.07 | 0.985 | 0.994 | 1.001 | 1.5 | 1.1 |
| Com. Ex. 7 | 9.59 | 1.043 | 1.045 | 0.981 | 0 | 0 |

**Table 5**

| | Sheet-shaped all-solid-state secondary battery | | |
|---|---|---|---|
| | Load characteristics capacity retention rate (%) | Charge-discharge cycle characteristics capacity retention rate (%) | Energy density (mAh/g) |
| Ex. 9 | 94.7 | 98.3 | 287 |
| Ex. 10 | 96.4 | 98.7 | 305 |
| Ex. 11 | 97.2 | 98.6 | 284 |
| Com. Ex. 7 | 94.3 | 96.3 | 253 |

As shown in Tables 3 to 5, in the cases of the sheet-shaped all-solid-state secondary batteries of Examples 9 to 11 including the positive electrode containing an oxide represented by the general formula (1) as the active material, high capacity retention rates were obtained in both the evaluation of the load characteristics and the evaluation of the charge-discharge cycle characteristics, and the batteries had excellent load characteristics and excellent charge-discharge cycle characteristics. In contrast, in the case of the battery of Comparative Example 7 including the positive electrode containing an aluminum niobium composite oxide that does not include the element M¹, as the active material, capacity retention rates were poor in both the evaluation of the load characteristics and the evaluation of the charge-discharge cycle characteristics.

The battery of Example 10 included the positive electrode that contained, as the active material, the oxide that was subjected to the reduction treatment in the container made of carbon and had a preferable value of Z, absorbances A1, A2, and A3 satisfying relationships of A1<A2 and A3<A2, and atomic percentages P and Q satisfying a relationship of P>Q. The battery of Example 10 had a higher energy density than the batteries of Examples 9 and 11 including the positive electrode containing the oxide that was not subjected to the reduction treatment, as the active material, and the battery of Comparative Example 7 including the positive electrode containing an aluminum niobium composite oxide that does not include the element M¹, as the active material.

The present invention can be embodied in other forms without departing from the essential characteristics thereof. The embodiments disclosed in this application are to be considered as illustrative and not limiting the present invention. The scope of the present invention is indicated by the appended claims rather than by the foregoing description, and all changes within the meaning and range of equivalency of the claims are intended to be encompassed therein.

### Industrial Applicability

The electrochemical element according to the present invention is applicable to the same applications as those of conventionally known secondary batteries including nonaqueous electrolytes (nonaqueous electrolyte solution or gel electrolyte), secondary batteries including aqueous electrolytes, all-solid-state secondary batteries, and super capacitors. The electrode for an electrochemical element according to the present invention can constitute the electrochemical element according to the present invention. The active material for an electrochemical element according to the present invention and the electrode material for an electrochemical element according to the present invention can constitute the electrode for an electrochemical element according to the present invention.

The electrochemical element according to the present invention has excellent load characteristics, and accordingly can be favorably used in applications where such characteristics are often required, such as power sources of industrial equipment and movable bodies (vehicles such as electric vehicles, hybrid cars, and electric motorcycles, ships, submarines, radio-controlled movable bodies, flying bodies such as rockets and artificial satellites, drones, etc.). There are movable bodies, such as hybrid cars, that charge batteries used therein with regenerative energy. In such a case, charging current and/or voltage could be unstable, and accordingly, dendrites of the element A are likely to be generated in the battery, and this may cause degradation of the battery. However, dendrites of the element A are unlikely to be generated from the oxide used as the active material in the electrochemical element according to the present invention, and therefore, even when regenerative energy is used in charging, it is possible to suppress degradation caused by dendrites of the element A, and the electrochemical element can be favorably applied to movable bodies in which charging is performed in this manner.

To summarize, the present application discloses the following configurations:
1. An electrode active material for an electrochemical element, comprising an oxide that has a monoclinic crystal structure and satisfies the following general formula (1), A_{y}M¹_{α}Al_{x-α}Nb_{12-x-z}M²_{z}O_{29-δ} (1), where Ais at least one element selected from Li and Na, M¹ is at least one element selected from the group consisting of Fe, Mn, Zn, Cu, Ag, Mg, Ca, Sr, Ba, Co, Eu, Y, Bi, La, Ce, Nd, Sm, and Gd, M² is at least one element selected from the group consisting of K, Ti, Ni, Zr, V, Mo, Ta, and W, and *x, y, z, δ*, and *α* satisfy 0<x≤1.1, 0≤y≤24, 0≤z≤2, -1≤δ≤2, and 0<α≤0.4x.
2. The electrode active material for an electrochemical element according to item 1, wherein, in the general formula (1), M¹ is at least one element selected from the group consisting of Fe, Zn, and Cu, and satisfies 0<δ≤2.
3. The electrode active material for an electrochemical element according to item 1 or 2, wherein a percentage Z (atomic%) of Nb⁴⁺ in all Nb in the oxide represented by the general formula (1) satisfies 3.5≤Z≤30.
4. The electrode active material for an electrochemical element according to item 1 or 2, wherein the electrode active material satisfies relationships of A1<A2 and A3<A2, where A1 is an absorbance at a wavelength of 500 nm, A2 is an absorbance at a wavelength of 600 nm, and A3 is an absorbance at a wavelength of 700 nm.
5. The electrode active material for an electrochemical element according to any one of items 1 to 4, wherein the electrode active material satisfies a relationship of P>Q, where P is an atomic percentage of the element M¹ relative to Nb determined through X-ray photoelectron spectroscopy and Q is an atomic percentage of the element M¹ relative to Nb determined through inductively coupled plasma atomic emission spectroscopy.
6. The electrode active material for an electrochemical element according to item 1, wherein the oxide represented by the general formula (1) satisfies the following general formula (2), M¹_{α}Al_{1-1.5α}Nb_{11+0.5α}O_{29-δ} (2), where M¹ is at least one element selected from Zn and Cu, and *α* and *δ* satisfy 0<α≤0.4 and 0≤δ≤0.5α.
7. A method for manufacturing the electrode active material for an electrochemical element according to any one of items 1 to 6, comprising firing the oxide represented by the general formula (1) or a precursor of the oxide in a container made of carbon in a vacuum atmosphere.
8. An electrode material for an electrochemical element comprising the electrode active material for an electrochemical element according to any one of items 1 to 6.
9. The electrode material for an electrochemical element according to item 8, further comprising a solid electrolyte.
10. An electrode for an electrochemical element comprising the electrode active material for an electrochemical element according to any one of items 1 to 6 or the electrode material for an electrochemical element according to item 8 or 9.
11. An electrochemical element comprising a positive electrode; and a negative electrode, wherein either the positive electrode or the negative electrode is the electrode for an electrochemical element according to item 10.
12. A movable body comprising the electrochemical element according to item 11.

### List of Reference Numerals

- 1, 100: Electrochemical element (secondary battery)
- 10: Positive electrode
- 20: Negative electrode
- 30: Solid electrolyte layer or separator
- 40: Sheathing can
- 50: Sealing can
- 60: Gasket
- 200: Electrode body
- 300: Positive electrode external terminal
- 400: Negative electrode external terminal
- 500: Laminate-film sheathing body

## Claims

1. A method for manufacturing an electrode active material for an electrochemical element,
the method comprising:
mixing a plurality of metal oxides to form a mixture; and
subjecting the mixture to a reduction treatment by placing the mixture in a container made of carbon and firing the mixture in a vacuum atmosphere at 800°C to 1200°C for 1 to 1000 hours, thereby producing an electrode active material for an electrochemical element that contains Nb, Al, and an element M¹,
wherein the metal oxides include a Nb oxide, an Al oxide, and an oxide of the element M¹, and
the element M¹ is at least one element selected from the group consisting of Fe, Mn, Zn, Cu, Ag, Mg, Ca, Sr, Ba, Co, Eu, Y, Bi, La, Ce, Nd, Sm, and Gd.

2. The method according to claim 1, wherein the electrode active material comprises an oxide that has a monoclinic crystal structure and satisfies the following general formula (R1),
M¹_{α}A1_{x-α}Nb_{12-x-z}M²_{z}O_{29-δ} (R1)
where M¹ is at least one element selected from the group consisting of Fe, Mn, Zn, Cu, Ag, Mg, Ca, Sr, Ba, Co, Eu, Y, Bi, La, Ce, Nd, Sm, and Gd, M² is at least one element selected from the group consisting of K, Ti, Ni, Zr, V, Mo, Ta, and W, and *x, z, δ*, and *α* satisfy 0<x≤1.1, 0≤z≤2, 0<δ≤2, and 0<α≤0.4x.

3. The method according to claim 2, wherein in the general formula (R1), the element M¹ is at least one element selected from the group consisting of Fe, Zn, and Cu.

4. The method according to claim 2 or 3, wherein a percentage Z (atomic%) of Nb⁴⁺ in all Nb in the oxide represented by the general formula (R1) satisfies 3.5≤Z≤30.

5. The method according to any one of claims 2 to 4, wherein the oxide represented by the general formula (R1) satisfies the following general formula (R2),
M¹_{α}Al_{1-1.5α}Nb_{11+0.5α}O_{29-δ} (R2)
where M¹ is at least one element selected from the group consisting of Zn and Cu, and *α* and *δ* satisfy 0<α≤0.4 and 0≤δ≤0.5α.

6. The method according to any one of claims 1 to 5, wherein the electrode active material satisfies relationships of A1<A2 and A3<A2, where A1 is an absorbance at a wavelength of 500 nm, A2 is an absorbance at a wavelength of 600 nm, and A3 is an absorbance at a wavelength of 700 nm.

7. The method according to any one of claims 1 to 6, wherein the electrode active material satisfies a relationship of P>Q, where P is an atomic percentage of the element M¹ relative to Nb determined through X-ray photoelectron spectroscopy and Q is an atomic percentage of the element M¹ relative to Nb determined through inductively coupled plasma atomic emission spectroscopy.
